# EUROPÄISCHE PATENTSCHRIFT

(11) **EP 1 761 444 B1**
(45) Veröffentlichungstag und Bekanntmachung des Hinweises auf die Patenterteilung: **05.09.2007**
(21) Anmeldenummer: 05747204.5
(22) Anmeldetag: 06.06.2005
(51) Int. Cl.: B65G 1/137, B65G 1/04

(54) **VERFAHREN ZUM FÖRDERN VON GÜTERN UND ANLAGE ZUR VERWIRKLICHUNG DES VERFAHRENS**
METHOD FOR TRANSPORTING GOODS, AND INSTALLATION FOR CARRYING OUT SAID METHOD
PROCEDE POUR TRANSPORTER DES MARCHANDISES ET INSTALLATION POUR REALISER CE PROCEDE

(30) Priorität: 04.06.2004 AT 9712004
(43) Veröffentlichungstag der Anmeldung: 14.03.2007
(73) Patentinhaber: "KATT" Transport GmbH, 8143 Dobl (AT)
(72) Erfinder: KOSTMANN, Helmut, 8075 Hart bei Graz (AT)
(74) Vertreter: Babeluk, Michael
(86) Internationale Anmeldenummer: PCT/AT2005/000196
(87) Internationale Veröffentlichungsnummer: WO 2005/118436

(56) Entgegenhaltungen:
- EP-A- 0 458 722
- EP-A- 1 447 354
- US-A- 5 434 490

## Beschreibung

Die Erfindung betrifft ein Verfahren zum Fördern von Gütern mit mindestens einem in einem Lager autonom verfahrbaren Fahrzeug, sowie eine Anlage zur Verwirklichung des Verfahrens.

Stand der Technik in der heutigen Lager- und Produktionslogistik ist es, für Transportvorgänge innerhalb eines Lagers im Bereich für Kartons und Behälter, also nicht für Paletten, entweder manuelle Handwagen oder eine Behälter- bzw. Kartonfördertechnik einzusetzen.

Sowohl das eine als auch das andere ist jedoch mit entscheidenden Nachteilen verbunden. Der Einsatz von manuellen Handwagen bedeutet hohen Personaleinsatz, die Installation einer Fördertechnik hohe Investitionen, insbesondere darin, wenn ein Lager mit vielen und unterschiedlichen Waren (Gewicht, Abmessungen, Bruchgefahr, etc.) zu bedienen ist.

Die DE 101 42 395 A1 beschreibt ein Lager- und Transportsystem in modularer Bauweise mit einer oder mehreren Regalzeilen zur Aufnahme von Lagergut in mehreren Regalebenen und einer Vielzahl von Schienenwegen, die auf Höhe der einzelnen Regalebenen angeordnet sind. Auf den Schienenwegen bewegen sich mehrere schienengebundene Fahrzeuge mit Mitteln zur Aufnahme und Abgabe des Ladeguts. Die Fahrzeuge werden über einen zentralen Steuerrechner unabhängig voneinander angesteuert und extern kabellos mit Energie versorgt.

Aus der EP 1 352 817 A1 ist eine Transporteinrichtung und ein Verfahren zum Transport von Bauteilen entlang einer Transportstrecke bekannt. Um lange Bauteile transportieren zu können, werden die Transportfahrzeuge durch den Bauteil selbst miteinander gekoppelt.

Die DE 38 23 540 C1 offenbart ein Verfahren zur Bedienung eines Regelschachtes für Stückgüter, bei dem zur Beschickung des Schachtes Stückgüter von der einen Schachtseite her in den Schacht hereingeschoben werden. Die Stückgüter werden im Schacht zur Bildung eines Zugs mechanisch gekoppelt. Zur Entnahme wird an einem schachtendständigen Stückgut gezogen, wobei das Stückgut vom Stückgutzug gelöst wird, wenn das in Entnahmerichtung nächste Stückgut in eine vorgegebene Position gezogen wird.

Die WO 01/70602 A2 zeigt eine Kommissionierungseinrichtung mit in einem Regal angeordneten Produktspeichern, in denen Produkte gestapelt sind, wobei das stapelunterste Produkt eines ausgewählten Produktspeichers durch eine positionierbare Ausschiebeeinheit in Regalquerrichtung ausschiebbar ist.

Aus der WO 03/011722 A1 ist eine ähnliche Einrichtung zum Kommissionieren eines Regals bekannt, wobei das Regal neben unabhängig voneinander bedienbaren ebenen Bediengeräten zumindest einen Lift und Stellplätze für ein- und auszuladende Behälter oder Tabletts aufweist.

Aus der US 5,684,696 A ist ein System und ein Verfahren bekannt, mit welchem autonom betriebenen Fahrzeugen ermöglicht wird, entlang eines kontinuierlichen Weges zu fahren.

Aus der US 4,809,178 A ist ein Hindernisdatenverarbeitungssystem für unbemannte selbstgesteuerte Fahrzeuge bekannt, mit welchem das Fahrzeug selbsttätig auf der Wegstrecke liegende Hindernisse umfährt.

Die US 2004/0091338 A1 offenbart ein Transfersystem, sowie eine Vorrichtung für Werkstückcontainer, wobei Fahrzeuge zwischen verschiedenen horizontalen Versorgungsplattformen fahren. Das Transfersystem weist weiters eine vertikale Bewegungseinheit auf, welche das Fahrzeug zu den Bearbeitungsstationen bringt. Das System wird zentral gesteuert. Zentral gesteuerte Systeme dieser Art haben den großen Nachteil, dass sie zu unflexibel und zu langsam sind, um hohe Durchsätze zu ermöglichen.

Die DE 298 08 762 U1 beschreibt ein fahrerloses Transportfahrzeug mit mehreren auf dem Transportfahrzeug angeordneten Lagerplätzen für Transportmittel, wobei das Transportfahrzeug eine Handhabungsvorrichtung zum Abstellen und Aufnehmen der Transportmittel an den Lagerplätzen und zum Abstellen und Aufnehmen der Transportmittel an seitlich des Transportfahrzeuges befindlichen ortsfesten Abstellplätzen aufweist. Die Handhabungsvorrichtung weist eine Drehvorrichtung zum Drehen des Transportmittels um eine vertikale Achse auf.

Weiters ist aus der DE 41 01 615 A1 ein Kommissionierautomat mit wenigstens einem Magazin zum stapelweisen Speichern von Stückgütern und einer wenigstens einem Magazin zugeordneten Ausschiebeeinrichtung zum automatischen Auswerfen einzelner Stückgüter aus dem Magazin bekannt. Dabei sind als Ausschiebeeinrichtung Luftdüsen vorgesehen.

Weiters sind Sortiereinrichtungen mit umlaufenden Sortierförderern bekannt, die gelenkig miteinander verbundene Elemente aufweisen, die mit kippbar gehaltenen Warenträgern zur Aufnahme von Stückgut versehen sind. Die Warenträger sind im Bereich von Warenabführeinrichtungen um eine in Förderrichtung verlaufende Achse wahlweise kippbar. Eine Sortiereinrichtung dieser Art ist aus der AT 398.536 B bekannt.

Ferner offenbart die DE 2 034 834 A1 ein kombiniertes Lagerbedienungsgerät in Art einer fahrbaren Ladeeinheit zum Be- und Entladen und Transportieren von Stückgut. Die Ladeeinheit, bestehend aus Hubmast und Hubwagen, ist durch ein Kupplungssystem mit einem dem Lagergut entsprechenden mitfahrenden Lagerteil verbunden, der die Lagergüter für die Be- bzw. Entladung im Lager aufnimmt und mitführt.

Die DE 32 47 960 C1 offenbart ein Förderfahrzeug mit einem fahrzeugeigenen Speicher mit mehreren voneinander getrennten Speicherplätzen und eine davon getrennte fahrzeugeigene Be- und Entladevorrichtung, die zur Ein- und Auslagerung des Stückgutes in die getrennten Speicherplätze ausgebildet ist. Das angetriebene Fahrzeug ist zwangsgeführt, insbesondere durch eine über Kopf verlaufende Führungsschiene oder durch ein Schleppfahrzeug schleppbar.

Aus der DE 33 28 241 A1 ist ein Förderfahrzeug mit einer Abstelleinrichtung für Stückgüter bekannt. Die als Speicher mit zumindest einem Speicherblatt ausgebildet ist und eine Be- und Entladeeinrichtung zur Ein- und Auslagerung eines Stückgutes in jeden Speicherplatz aufweist. Die Be- und Entladeeinrichtung ist dabei als Satellitenfahrzeug ausgebildet, welches zur Übernahme des Stückgutes vom Förderfahrzeug selbst mitgenommen wird. Dort kann das Satelittenfahrzeug wenigstens nach einer Seite zur Stückgutübernahme oder -abgabe selbsttätig ausfahren.

Mit all den bekannten Systemen kann entweder nur eine bescheidene Zugriffzahl oder eine sehr eingeschränkte Variabilität erreicht werden.

Bei bekannten Kommissionierautomaten ist pro Produktart eine Ausschiebeeinrichtung mit jeweils eigenem Motor oder pneumatischen Einrichtungen erforderlich. Insbesondere bei großer Produktvielfalt, beispielsweise in pharmazeutischen Lagern, ist eine große Anzahl an Ausschiebeeinrichtungen erforderlich.

Aufgabe der Erfindung ist es, diese Nachteile und Schwierigkeiten zu vermeiden und ein Verfahren der eingangs beschriebenen Art sowie eine Anlage zur Verwirklichung des Verfahrens zu schaffen, welche mit nur einem geringen Personaleinsatz und mit einem nur geringen Kapitaleinsatz das Auslangen finden, hierbei jedoch eine äußerst flexible Förderung der Güter gestatten, und zwar auch für in einem Lager zu lagernde sehr unterschiedliche Güter. Weiters soll das Verfahren bzw. die Anlage für unterschiedlichste logistische Anforderungen in einfacher Weise anpassbar sein. Insbesondere ist es eine Aufgabe der Erfindung eine hohe Zugriffszahl zu ermöglichen. Ferner ist es Aufgabe, den Aufwand für die Be- und Entladung von Lagerstellen in einem Lager zu verringern.

Diese Aufgabe wird bei einem Verfahren der eingangs beschriebenen Art durch die Kombination folgender Merkmale gelöst:
- ein mit einer Recheneinheit ausgestattetes Fahrzeug erhält, vorzugsweise über Funk, mindestens einen Auftrag, und zwar bezüglich:
   a) eines abzuholenden oder abzugebenden Gutes, und/oder
   b) eines Zielortes z.B. einer Lagerstelle im Lager, und/oder
   c) eines zurückzulegenden Weges,
- worauf die Recheneinheit des Fahrzeugs
   - für den Auftrag a) den Zielort und den optimalen bzw. angenähert optimalen Fahrweg,
   - für den Auftrag b) den optimalen bzw. annähernd optimalen Fahrweg festlegt,
   - für die Aufträge a) oder b) oder c) die Bewegungstransaktion startet,
   - wobei am Zielort das Fahrzeug von der Recheneinheit aktiviert wird, indem es das Gut selbsttätig übernimmt oder abgibt oder beladen bzw. entladen wird,
   - worauf gegebenenfalls bei Vorliegen eines weiteren Auftrages ein weiteres Gut geholt oder das aufgeladene Gut zu einem weiteren in einem Auftrag gemäß a), b) und/oder c) definierten Zielort geführt wird.

Unter Gut ist hierbei entweder eine einzelne Ware zu verstehen oder auch ein Behälter, beispielsweise ein Karton, in dem eine Mehrzahl von Waren enthalten ist oder eingebracht wird.

Wesentlich ist, dass die Fahrzeuge autonom agieren. Dies bedeutet, dass die Fahrzeuge nach Erhalt eines Auftrages durch die sich an Bord jedes Fahrzeuges befindende Recheneinheit und die sich an Bord befindenden interaktiven Sensoreinrichtungen in der Lage sind, selbsttätig und/oder in Gruppen Aufträge auszuführen. Dadurch können beispielsweise sperrige Güter von mehreren Fahrzeugen gemeinsam transportiert werden, wobei die Fahrzeuge selbsttätig - und ohne Einfluss von einem zentralen Steuerrechner - miteinander kommunizieren und aufgrund des gestellten Auftrages eine in einer Datenbank jeder Recheneinheit abgelegte Strategie zur Erfüllung des Auftrages auswählen. Eine derartige Strategie kann beispielsweise die Weitergabe von Gütern in einem engen Gang von Fahrzeug zu Fahrzeug sein. Die Fahrzeuge bilden somit eine Stafette, um das Gut vom ersten bis zum letzten Fahrzeuge weiterzureichen.

Die Recheneinheit an Bord jedes Fahrzeuges ermöglicht die Fahrzeuge weiters auch Kreuzungen ohne Steuerung eines übergeordneten Rechners ohne Kollision zu passieren, indem die Fahrzeuge zum Beispiel nach der Rechtsvorrangregel wie im Straßenverkehr agieren.

Aufgrund ihrer Sensorik und Kommunikationsmitteln zwischen den Fahrzeugen sind die Fahrzeuge in der Lage, echte Hindernisse von einem auslastungsbedingten Stau zu unterscheiden und entsprechend auszuweichen oder Ersatzrouten zu befahren, ohne dafür Befehle von einem Zentralrechner empfangen zu müssen.

Aufgrund dieser Selbständigkeit ist die Anzahl der Fahrzeuge, die in einer Anwendung an einem Zentralrechner betrieben werden kann, praktisch unbegrenzt. Die Funktion des Zentralrechners beschränkt sich auf die Übertragung von Auftragsdaten und die Verteilung von Daten an die Fahrzeuge, die für die Durchführung ihrer Aufträge relevant sind. Diese Informationen können mit Staumeldungen eines Radioverkehrsfunks verglichen werden.

Wie eingangs erläutert, ist es bekannt, zum Fördern von Gütern Fahrzeuge einzusetzen, welche durch einen zentralen Computer gesteuert werden. Derartige Systeme sind allerdings aufgrund der begrenzten Kapazität des Zentralcomputers nur auf eine beschränkte Anzahl von Fahrzeugen einsetzbar und haben darüber hinaus den Nachteil, dass eine nur relativ geringe Anzahl von Zugriffen möglich wird. Auch mit leistungsstarken Zentralcomputern ist eine wesentlichen Erhöhung der Zugriffszahl nicht erreichbar.

Um hier ein deutliche Verbesserung zu schaffen, geht die Erfindung einen anderen Weg, nämlich indem die Steuerung der Fahrzeuge völlig autonom an Bord jedes Fahrzeuges durch die Recheneinheit und ohne Einflussnahme durch einen zentralen Computer außerhalb des Fahrzeuges erfolgt. Der Unterschied zwischen bekannten zentralgesteuerten Systemen und den erfindungsgemäßen autonom und selbsttätig verfahrbaren Fahrzeugen ist ähnlich dem einer ferngesteuerten Marionette und einem selbsttätig agierenden Roboter. Durch den Einsatz von autonom agierenden Fahrzeugen für Anlagen zum Fördern von Gütern kann die Zugriffszahl entscheidend und in überraschend hohem Masse gesteigert werden.

Gemäß einer ersten bevorzugten Ausführungsform erfolgt das Be- und/oder Entladen des Fahrzeuges passiv, wobei sich vorzugsweise im Lager mindestens ein aktives Beladeelement und/oder Entladeelement befindet und bei Einlangen des Fahrzeuges aktiviert wird, vorzugsweise mittels des Fahrzeuges selbst.

Eine weitere bevorzugte Ausführungsform ist dadurch gekennzeichnet, dass das Be- und/oder Entladen des Fahrzeuges aktiv erfolgt, zu welchem Zweck ein am Fahrzeug angeordnetes antreibbares Be- und Entladeelement aktiviert wird, wie z.B. ein Förderband, eine Förderkette, Förderrollen etc., vorzugsweise durch das Fahrzeug selbst.

Zweckmäßig kann auch das Be- und Entladen des Fahrzeuges bei Einlangen des Fahrzeuges an der Be- bzw. Entladestelle automatisch, d.h. durch am Fahrzeug vorgesehene Mitnahmeeinrichtung und/oder durch Schwerkraft erfolgen.

Zum Transportieren eines Gutes mit großen Abmessungen ist es vorteilhaft, wenn zwei oder mehrere Fahrzeuge unter Bildung einer Funktionseinheit zumindest einen Teil der Fahrstrecke gemeinsam zurücklegen und gegebenenfalls gemeinsam ein mit seinen Abmessungen die Abmessungen eines einzelnen Fahrzeuges überschreitendes Gut transportieren, wobei zweckmäßig das Be- und/oder Entladen der Funktionseinheit für die einzelnen Fahrzeuge parallel, d.h. gleichzeitig, durchgeführt wird, oder seriell, d.h. unter Weiterreichung mindestens eines Gutes von Fahrzeug zu Fahrzeug.

Eine solche Funktionseinheit aus zwei oder mehr Fahrzeugen kann jedoch auch selbst als Fördereinrichtung zum Fördern eines Gutes von einem Fahrzeug an einem Ende der Funktionseinheit zu einem Fahrzeug am anderen Ende derselben dienen.

Soll das Fördern eines Gutes nicht nur in einer Ebene, sondern in zwei oder mehreren übereinanderliegenden Ebenen erfolgen, so wird vorteilhaft ein Gut mittels eines Fahrzeugs in vertikaler Richtung gefördert, und zwar durch Anheben bzw. Senken einer am Fahrzeug vorgesehenen Gutablage.

Es kann jedoch auch zweckmäßig sein, dass ein Fahrzeug von einer Ebene in eine vertikal darüber- oder darunterliegende Ebene gehoben und/oder gesenkt wird.

Für das Be- und Entladen eines Fahrzeuges ist nicht unbedingt dessen Stillstand erforderlich, sondern es kann auch bei in Fahrt befindlichem Fahrzeug erfolgen.

Eine Anlage zur Verwirklichung des Verfahrens ist durch die Kombination folgender Merkmale gekennzeichnet:
- ein Lager für Güter, das eine Mehrzahl von für die Güter bestimmte Lagerstellen aufweist,
- mindestens einen Fahrweg entlang und/oder zwischen den Lagerstellen,
- mindestens ein mit einer Recheneinheit ausgestattetes, autonom verfahrbares Fahrzeug mit einer Gutablage für mindestens ein Gut,
- mit einem von der Recheneinheit aktivierbaren Fahrwerk und
- mit einer Datenübertragungseinrichtung zur Übermittlung von an einer Schaltstelle aufgegebenen Daten zur Recheneinheit des Fahrzeuges.

Vorzugsweise ist die Anlage gekennzeichnet durch ein Fahrzeug mit einem die Gutablage versorgenden aktiven Be- und/oder Entladeelement, aktivierbar von der Recheneinheit und wirkend quer und/oder längs zur Fahrtrichtung des Fahrzeuges oder auch gekennzeichnet durch ein Fahrzeug, dessen Gutablage selbst als Fördereinrichtung wirkend quer und/oder längs zur Fahrtrichtung des Fahrzeuges ausgebildet ist, welche Gutablage aktivierbar ist von der Recheneinheit.

Dadurch, dass das Fahrzeug selbst ein Be- und/oder Entladeelement aufweist, entfallen derartige Elemente an der Lagerstelle. Dies ist insbesondere für Lager mit einer großen Zahl an Lagerstellen, wie beispielsweise pharmazeutische Lager, von Vorteil, da die Anzahl an Motoren, Luftdüsen oder dergleichen wesentlich gesenkt werden kann. Die fahrzeuggebundenen Be- und/oder Entladeelemente ermöglichen eine ganz andere Art der Logistik. So ist es möglich, Güter während der Fahrt des Fahrzeuges aufzunehmen oder abzugeben, wodurch die Zugriffszahl drastisch erhöht werden kann.

Zum Fördern eines Gutes in nicht nur einer Ebene ist zweckmäßig die Gutablage des Fahrzeuges mittels einer Hubeinrichtung heb- und senkbar, welche Hubeinrichtung vorzugsweise von der Recheneinheit aktivierbar ist.

Eine besonders einfache Art des Beladens eines Fahrzeuges kann dadurch bewerkstelligt werden, dass das Fahrzeug mit einer Auswurfeinrichtung zum automatischen Be- und/oder Entladen in, bzw. aus Schwerkraftschächten ausgestattet ist, welche Auswurfeinrichtung vorzugsweise mittels der Recheneinheit von einer aktiven Position in eine passive Position und umgekehrt aktivierbar ist.

Um sperriges Gut oder gleichzeitig eine Vielzahl von Gütern zu transportieren, ist die Anlage zweckmäßig gekennzeichnet durch zwei oder mehrere Fahrzeuge, die mit einer Kupplungseinrichtung ausgestattet sind und die zu einer Funktionseinheit kuppelbar sind, welche Kupplungseinrichtungen vorzugsweise mittels der Recheneinheit aktivierbar sind. Die Kupplungseinrichtung ist dabei eine logische Kupplung, welche durch Kommunikation der Fahrzeuge definiert ist. Bei logischer Kupplung werden über die Recheineinheiten die Abstände zwischen den Fahrzeugen konstant gehalten, wobei die Fahrzeuge sich nicht unbedingt berühren müssen und voneinander beabstandet sein können.

Für eine zweckmäßige Datenübertragung ist die Anlage gekennzeichnet durch eine Datenübertragungseinrichtung zur Übermittlung von an der Schaltstelle aufgegebenen Daten zur Recheneinheit, die vorzugsweise ausgebildet ist als Funkeinrichtung und/oder Infrarotschnittstelle und/oder als Steckverbindung und/oder verwirklicht ist durch Schleifkontakte und/oder als Ultraschalleinrichtung ausgebildet ist.

Vorzugsweise ist die Anlage gekennzeichnet durch mindestens eine Lagerstelle mit einem aktiven Be- und/oder Entladeelement, aktivierbar vorzugsweise von der Recheneinheit des Fahrzeuges.

Zum Heben und Senken des Fahrzeuges selbst weist die Anlage eine Hebe- und Senkeinrichtung neben einer Lagerstelle auf, vorzugsweise aktivierbar von der Recheneinheit des Fahrzeuges.

Eine weitere bevorzugte Variante zum besonders einfachen Beladen eines Fahrzeuges ist gekennzeichnet durch eine Lagerstelle ausgestattet mit einer schwerkraftbedingten Fördereinrichtung, wie einer geneigten Rollenbahn, wobei die Lagerstelle an der Fahrbahn mit einer Stopp-Einrichtung für ein Gut versehen ist, die vom Fahrzeug aktivierbar oder deaktivierbar ist, entweder mechanisch durch Eintreffen oder Vorbeibewegen des Fahrzeuges an der Lagerstelle oder durch die Recheneinheit.

Mit den mit den in den Ansprüchen beschriebenen Merkmalen mit einem einzigen Produkt können eine Vielzahl an heute üblichen Produkten in der Lagertechnik substituiert werden. Es können damit Fördertechnik, Kommissionierautomaten, Regalbediengeräte, Karusellsysteme und Sorter vereinheitlicht werden. Damit werden zukünftige Kommissionierlager in ihrer Gesamtheit vereinfacht, durch verringerten Personaleinsatz wirtschaftlicher und in deren Funktionsumfang erweitert.

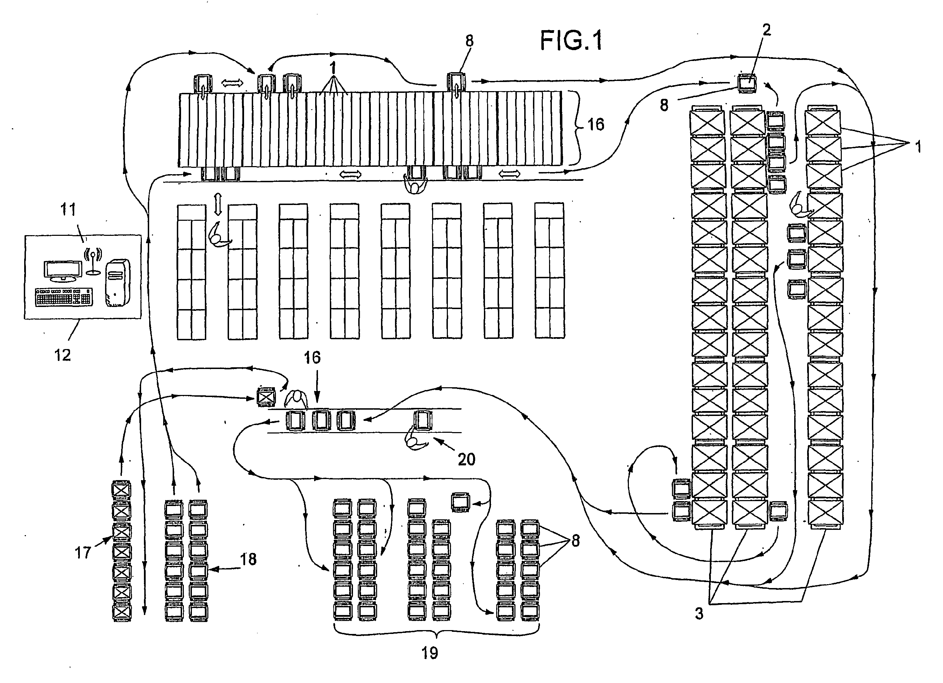

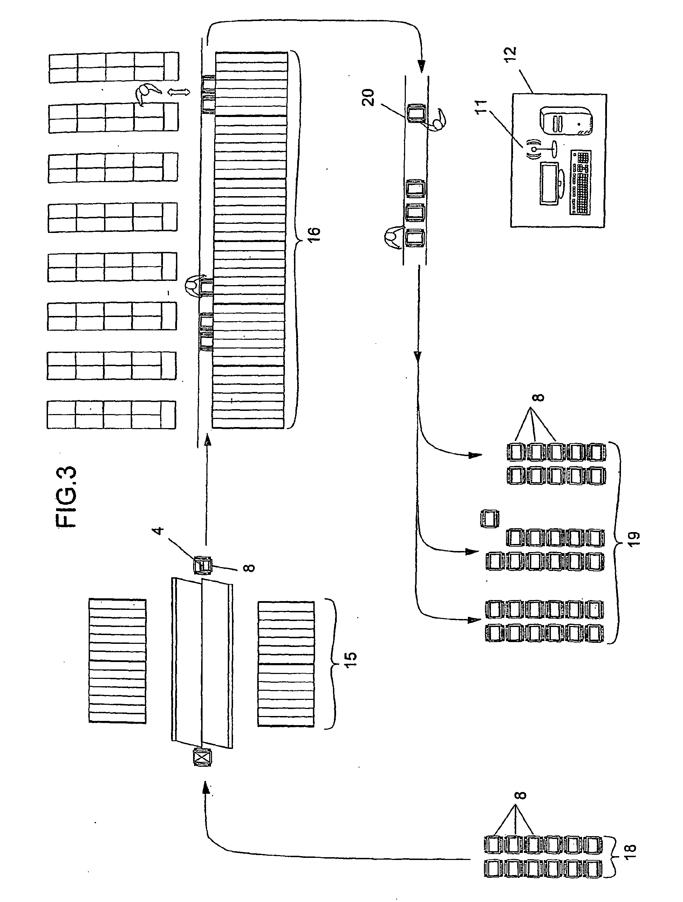

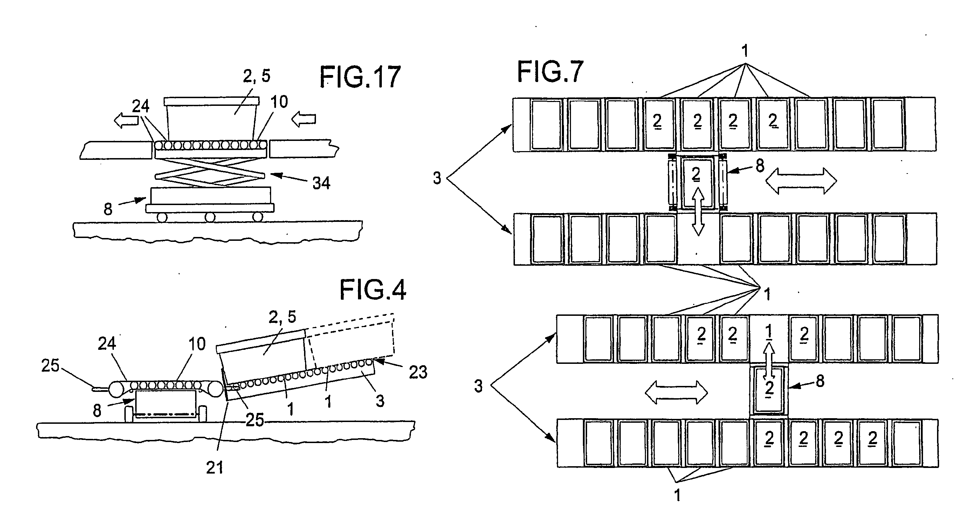

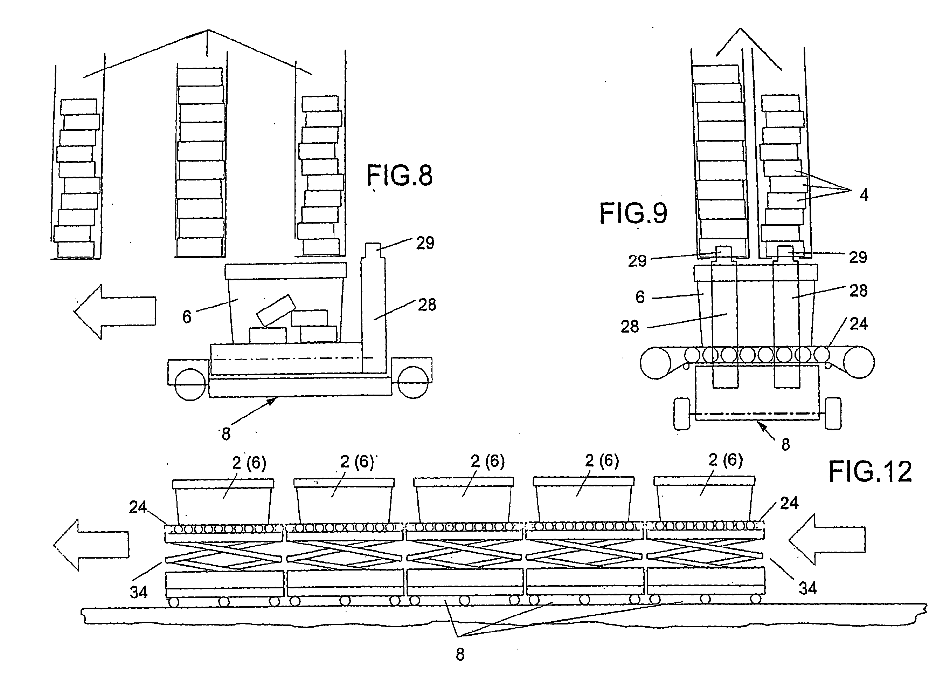

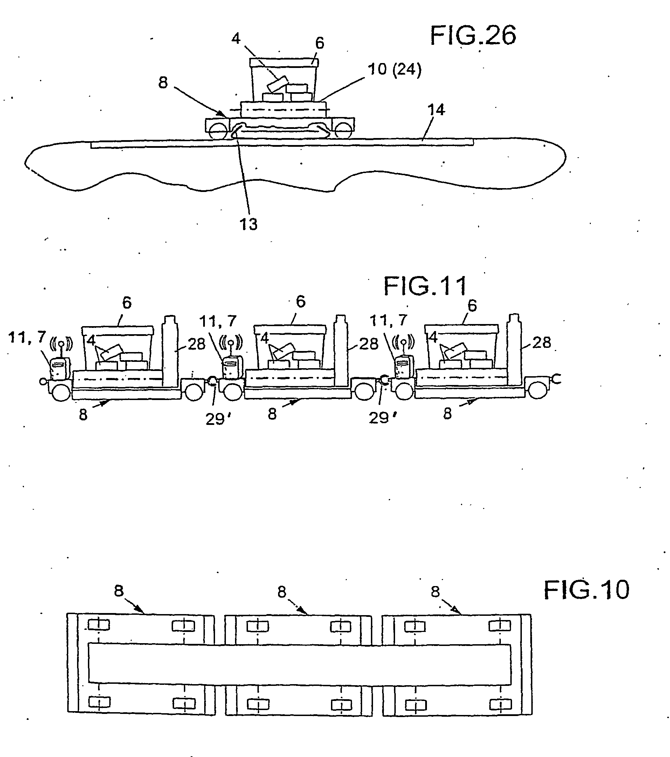

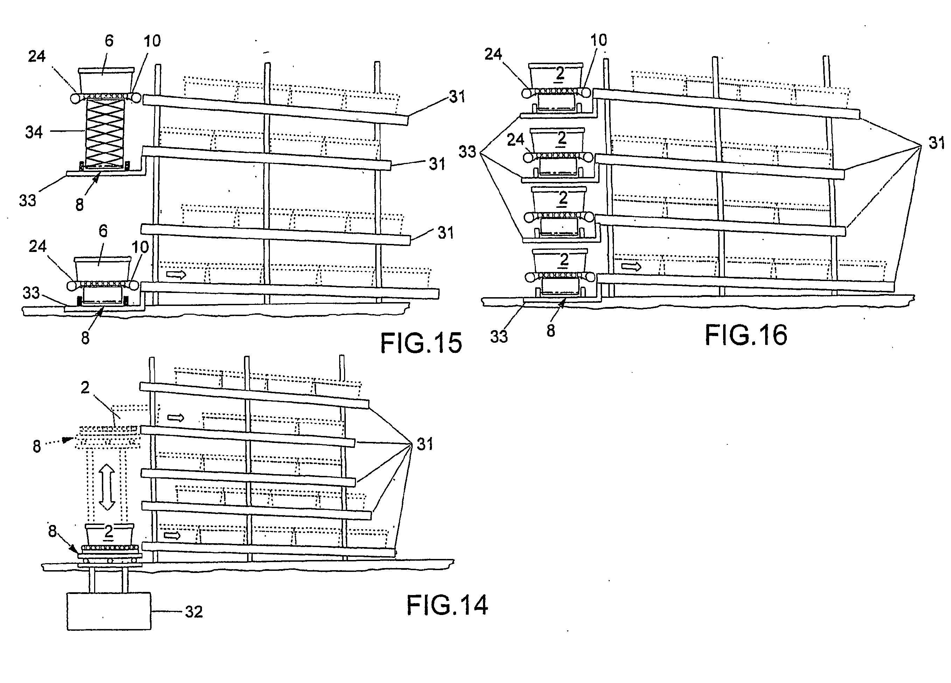

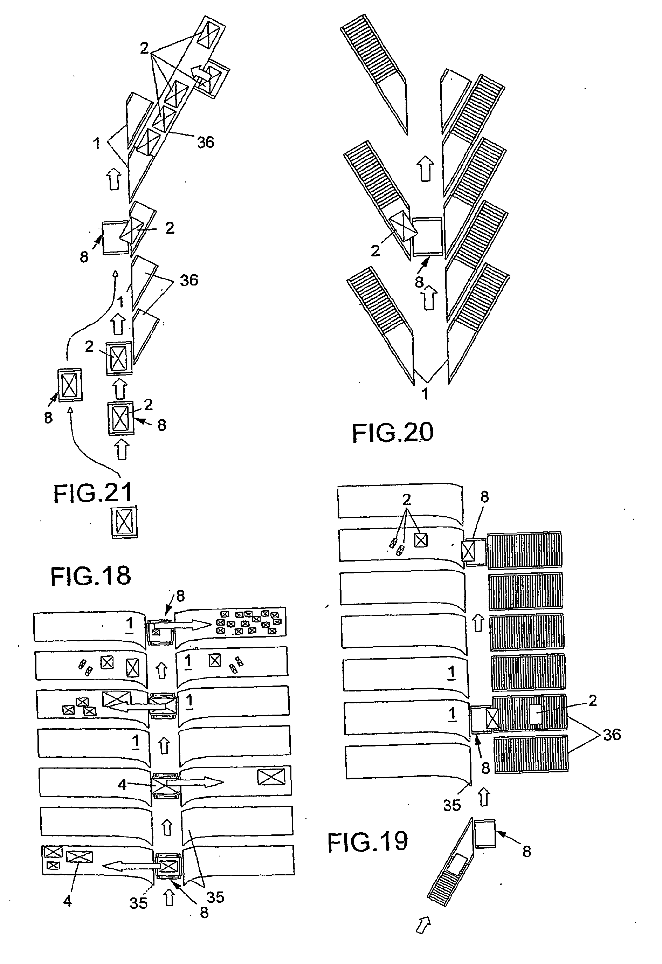

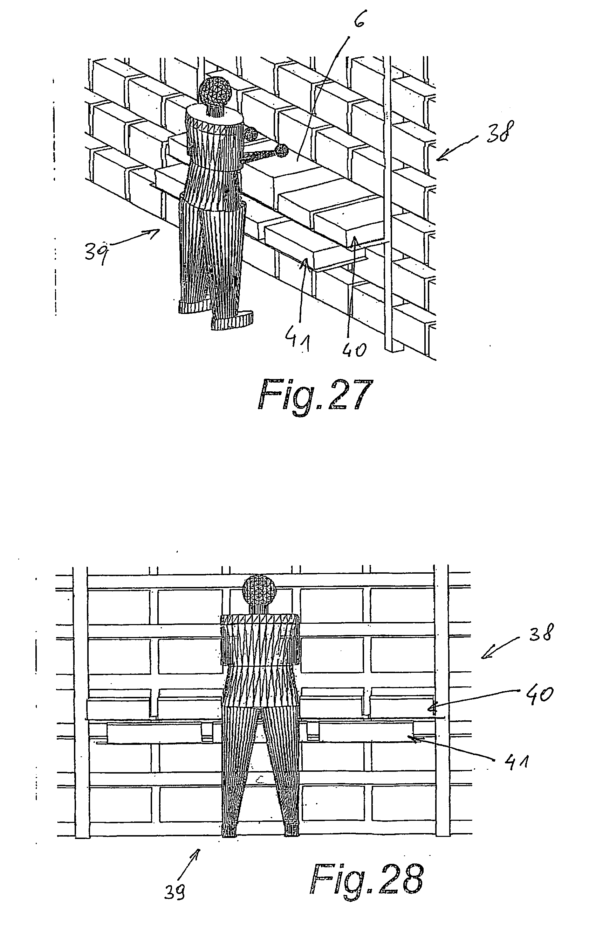

Die Erfindung ist nachfolgend anhand mehrerer in der Zeichnung schematisch dargestellter Ausführungsbeispiele näher erläutert, wobei die Fig. 1, Fig. 2 und Fig. 3 jeweils eine Draufsicht auf ein Lager veranschaulichen. Die Fig. 4, Fig. 5 und Fig. 6 geben Varianten für unterschiedliche Gutübergaben wieder, und zwar in Seitenansicht. Fig. 7 zeigt eine Draufsicht auf einen Teil eines Lagers. Fig. 8 stellt in Seitenansicht ebenfalls eine Variante einer Gutübergabe auf ein Fahrzeug dar, Fig. 9 ist eine Ansicht in Richtung des Pfeils IX der Fig. 8. Die Fig. 10, Fig. 11 und Fig. 12 zeigen in Draufsicht bzw. in Seitenansicht den Zusammenschluss mehrerer Fahrzeuge zu einer Funktionseinheit. Fig. 13 gibt in Seitenansicht eine Fördereinrichtung wieder, in den Fig. 14 bis Fig. 16 ist ein Gutlager in Seitenansicht mit verschiedenen Varianten der Gutförderung in einer Mehrzahl von übereinanderliegenden Ebenen veranschaulicht. Fig. 17 zeigt den Einsatz eines Fahrzeuges als Fördermittel von einer Lagerstelle zu einer anderen. Die Fig. 18 bis Fig. 24 zeigen Details eines Lagers jeweils in Draufsicht. Fig. 25 veranschaulicht einen Antrieb eines Fahrzeuges, Fig. 26 eine Variante einer Energie- und/oder Datenversorgung eines Fahrzeuges. Die Fig. 27 und Fig. 28 zeigen einen einfachen Kommissionierarbeitsplatz in Schrägansicht und Frontalansicht.

Gemäß Fig. 1 sind in einem Lager in einzelnen Lagerstellen 1 Güter 2 untergebracht und/oder unterzubringen, und zwar in jeweils für ein Gut 2 bestimmtes Regal 3 bzw. einen bestimmten Aufbewahrungsort. Jedes Gut 2 kann von einer einzeln verpackten Ware 4 gebildet sein oder es sind Waren 4 zu mehreren in Kartons 5 oder Transportbehältern 6 eingeordnet, wobei jeder Karton 5 bzw. Transportbehälter 6 ein Gut 2 im Sinne der Erfindung bildet.

Zwischen den Lagerstellen 1 der Stellagen bzw. Regale 3 sind mit einer Recheneinheit 7 ausgestattete Fahrzeuge 8 verfahrbar, und zwar mittels eines eigenen Antriebs 9 (siehe Fig. 25). Dieser ist von der Recheneinheit 7 aktivierbar und deaktivierbar. Die Fahrzeuge 8 können elektrisch betrieben sein, wobei als Energiespeicher Batterien oder Akkumulatoren dienen. Wenn das Spannungsniveau unter ein vordefiniertes Mindestniveau sinkt kann dabei das Fahrzeug 8 selbsttätig eine Batteriewechsel- oder Batterieladestation anfahren. Alternativ oder zusätzlich können auch andere Energiequellen, wie Brennstoffzellen oder Solarzellen, eingesetzt werden.

Über nicht weiter dargestellte Sensoren jedes Fahrzeugs 8, beispielsweise, optischer oder akustischer Art, wird die Umgebung jedes Fahrzeugs 8 erfasst, um beispielsweise im Falle von Hindernissen rechtzeitig Ausweichstrategien zu entwickeln. Diese können in den Recheneinheiten jedes Fahrzeuges 8 abgelegt sein, um im Bedarfsfall darauf zurückgreifen zu können, ohne dass ein zentraler Computer eingeschaltet werden muss. Gegebenenfalls können die Fahrzeuge auch untereinander kommunizieren und auf diese Weise geeignete Maßnahmen für bestimmte Situationen finden. Auch Strategien zur Erfüllung von bestimmten Aufträgen sind in Datenbanken bzw. Strategiebibliotheken der Recheneinheiten 7 der Fahrzeuge 8 abgelegt.

Das Fahrzeug 8 weist eine Gutablage 10 für mindestens ein Gut 2 auf. Eine Datenübertragungseinrichtung 11 dient zum Übermitteln von an einer vorzugsweise zentralen Schaltstelle 12 aufgegebenen Daten zur Recheneinheit 7 des Fahrzeugs 8. Diese Datenübertragungseinrichtung 11 kann als Funkeinrichtung und/oder als Infrarotschnittstelle und/oder als Ultraschalleinrichtung ausgebildet sein. Es ist auch möglich, das Fahrzeug 8 mittels Schleifkontakte 13, die an Leitungen 14 angreifen, die entlang des Fahrweges verlegt sind, mit den nötigen Daten bezüglich eines abzuholenden oder abzugebenden Gutes 2 und/oder eines Zieles im Lager und/oder eines zurückzulegenden Weges und/oder mit Energie zu versorgen (siehe Fig. 26)

Wie aus den Fig. 1 bis Fig. 3 zu ersehen ist, ist das Lager an keine bestimmte Form gebunden. Es kann mit Einrichtungen zum Kommissionieren der Güter 2 bzw. Waren 4, wie zum automatischen Kommissionieren 15 oder manuellem Kommissionieren 16, ausgestattet sein. In der Regel werden die zu lagernden bzw. zu kommissionierenden Güter 2 auf den Fahrzeugen 8 an einer Stelle 17 bereitgestellt und die leeren Fahrzeuge 8 an einer anderen Stelle 18 gesammelt.

Die mit den gewünschten Gütern 2 bzw. Waren 4 versorgten Fahrzeuge 8 sind in einem Versandbereitstellungsbereich 19 für den Versand bereitgehalten, nachdem die zuvor beladenen Fahrzeuge 8 eine Prüfstation 20 passiert haben.

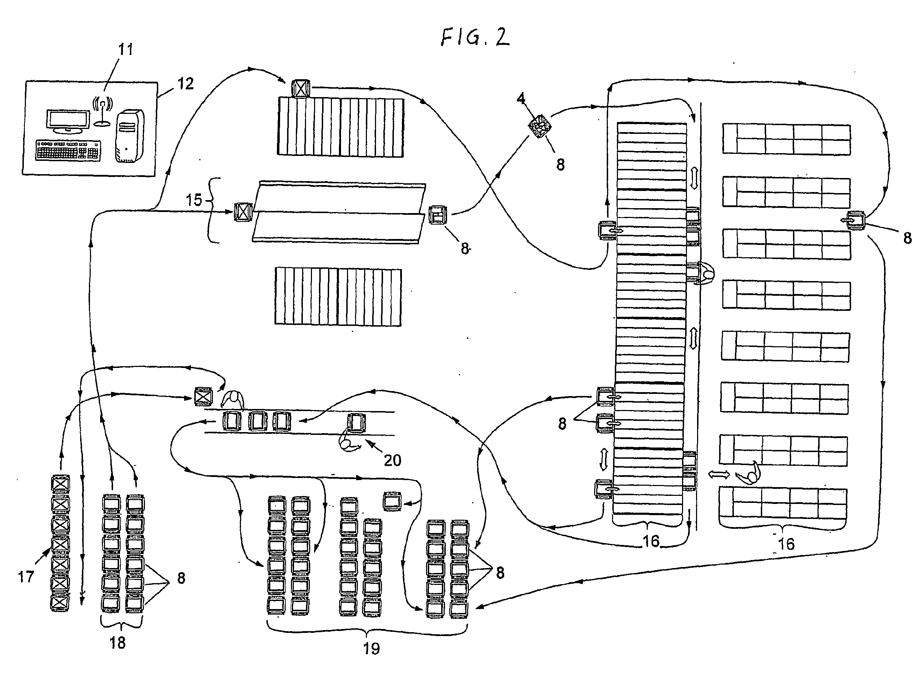

Fig. 4 veranschaulicht Lagerstellen 1 in einem Regal 3 bzw. einer Stellage, die geneigt angeordnet sind und auf denen sich ein Gut 2 infolge Schwerkraft gegen einen am vorderen Ende 21 der ersten Lagerstelle 1 befindlichen Anschlag 22 über eine Rollbahn 23 bewegt. Dieser Anschlag 22 kann von einem nicht näher dargestellten Mitnehmer des Fahrzeuges 8, der gegebenenfalls von der Recheneinheit 7 aktiviert oder deaktiviert wird, zur Seite oder nach unten bzw. oben verschoben werden, d.h. in eine Lage gebracht werden, in der das Gut 2 bzw. der Karton 5 sich über das Ende 21 der Rollbahn 23 hinausbewegt, in welchem Fall dann das Gut 1 von einem am Fahrzeug 8 befindlichen, die Gutablage 10 bildenden, aktiven Be- und Entladeelement 24, das im in Fig. 2 dargestellten Ausführungsbeispiel als Förderband ausgebildet ist, erfasst wird und auf das Fahrzeug 8 bewegt wird. Verlässt anschließend das Fahrzeug diese Lagerstelle 1, gelangt der Anschlag 22 wieder in die ursprüngliche Lage zurück, sodass sich ein auf der Rollbahn 23 nachfolgendes Gut 2 wiederum nur bis zum Ende 21 der Rollbahn 23 gegen den Anschlag 22 bewegt. Es ist auch möglich, ein Gut 2 mittels am Be- und Entladeelement 22 angeordneter Mitnehmer 25 über den Anschlag 22 zu heben und so zur Gänze auf die Gutablage 10 zu bewegen.

Die Abgabe des Gutes 2 erfolgt an der gewünschten Stelle ebenfalls durch Aktivieren des Förderbandes 24, vorzugsweise über die Recheneinheit 7 des Fahrzeuges 8. Anstelle des Förderbandes kann auch ein Kettenförderer oder können angetriebene Rollen (siehe Fig. 17) etc. vorgesehen sein. Die Förderrichtung muss nicht unbedingt quer zur Fortbewegungsrichtung des Fahrzeuges 8, wie dies in Fig. 4 veranschaulicht ist, erfolgen, sondern kann bei Bedarf auch in Längsrichtung der Fahrtrichtung erfolgen, beispielsweise durch eine geänderte Anordnung des Förderbandes oder einer von antreibbaren Rollen gebildeten Rollbahn, wie z.B. in Fig. 17 veranschaulicht ist.

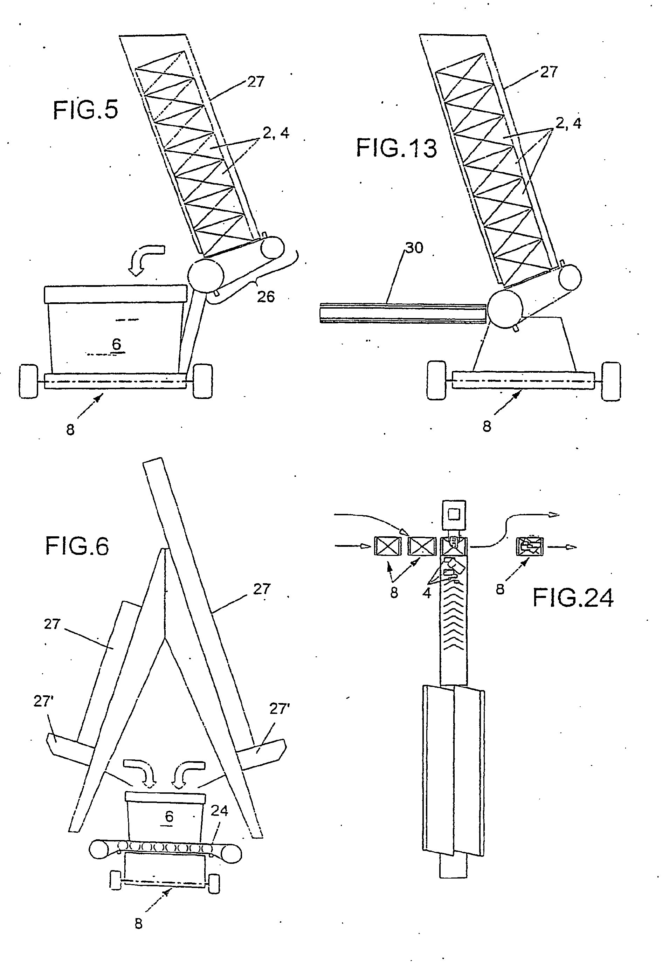

Gemäß Fig. 5 ist auf der Gutablage 10 des Fahrzeuges 8 als Gutablage ein Behälter 6 angeordnet, und das Fahrzeug 8 weist eine als Fördereinrichtung ausgebildete Auswurfeinrichtung 26 zum Entnehmen eines Gutes 2 bzw. einer Ware 4 aus einem Stapel von Gütern 2, die in einem Schwerkraftschacht 27 angeordnet sind, auf. Durch Aktivieren dieser Auswurfeinrichtung 26 mittels der Recheneinheit 7 kann eine bestimmte Anzahl von Gütern 2 aus dem Schwerkraftschacht 27 entnommen und in dem Behälter 6 deponiert werden.

Fig. 6 zeigt eine ähnliche Einrichtung mit Schwerkraftschächten 27, bei der jedoch eine Freigabe eines Gutes 2 bzw. einer Ware 4 durch eine Einrichtung 27' (Auswerfer) an den Schwerkraftschächten 27 selbst erfolgt. Diese Einrichtung 27' kann vorzugsweise ebenfalls über die Recheneinheit 7. des Fahrzeuges 8 angesteuert werden.

Fig. 7 veranschaulicht das Entnehmen bzw. das Abgeben eines Gutes 2 von einer bzw. an eine Lagerstelle 1 des Lagers.

Anhand der Fig. 8 und Fig. 9 ist ebenfalls eine Entnahme einer Ware 4 oder eines Gutes 2 von in Schwerkraftschächten 27 gestapelten Gütern 2 bzw. Waren 4 gezeigt, wobei die jeweils unterste Ware durch eine als Mitnahmeeinrichtung ausgebildete Auswurfeinrichtung 28, die am Fahrzeug 8 angeordnet ist, in einen Behälter 6, der sich auf der Gutablage 10 des Fahrzeuges 8 befindet, gefördert wird. Die Auswurfeinrichtung 28 kann von der Recheneinheit 7 des Fahrzeuges 8 aktiviert oder deaktiviert werden, wobei im aktivierten Zustand ein mit dem jeweils untersten Gut 2 in Kontakt gelangender Mitnahmestift 29 aus der Auswurfeinrichtung 28 vorragt.

Die Fig. 10, Fig. 11 und Fig. 12 zeigen den Zusammenschluss mehrerer Fahrzeuge 8 mittels Kupplungen 29', vorzugsweise aktivierbar mit den Recheneinheiten 7 der Fahrzeuge 8, zu einer Funktionseinheit, wobei gemäß Fig. 10 diese Funktionseinheit dazu dient, ein großes sperriges Gut 2, das mit einem einzelnen Fahrzeug 8 nicht gefördert werden könnte, zu transportieren, und gemäß Fig. 11 und 12 dazu dient, eine Mehrzahl von Gütern 2 bzw. Waren 4 gleichzeitig zu fördern. Es kann jedoch auch unter Umständen erforderlich sein, diese Funktionseinheit selbst als Fördereinrichtung bei stillstehenden Fahrzeugen 8 zu verwenden (siehe Fig. 12), indem auf das letzte Fahrzeug 8 dieser Funktionseinheit ein Gut 2 aufgegeben wird und über die aktivierbaren Rollbahnen 24 oder Förderbänder 24 der Fahrzeuge 8 zum ersten Fahrzeug 8 der Funktionseinheit transportiert wird und dort an einer Lagerstelle 1 abgegeben wird.

Fig. 13 veranschaulicht eine Variante, gemäß der ein Fahrzeug 8 nicht zum Transport eines Gutes 2 bzw. einer Ware 4 eingesetzt wird, sondern lediglich zum Entnehmen eines Gutes aus einem Fallschacht 27 und Fördern auf eine neben dem Fahrzeug 8 in Stellung gebrachte Fördereinrichtung 30, z.B. auf ein Förderband.

Die Fig. 14 bis Fig. 16 veranschaulichen ein Lager mit Gütern 2, die in mehreren Ebenen 31, die übereinander angeordnet sind, gelagert sind. Um diese Ebenen 31 mit einem Fahrzeug 8 zu versorgen, sind mehrere Möglichkeiten denkbar. Entweder es wird, wie in Fig. 14 dargestellt, das gesamte Fahrzeug 8 selbst mit einer Hebeeinrichtung 32 in die richtige Höhe gehoben, oder das Fahrzeug 8 gelangt über eine Rampe auf einen Fahrweg 33, der in der entsprechenden Etagenhöhe angeordnet ist (Fig. 15 und Fig. 16). Eine weitere Möglichkeit zeigt Fig. 15, gemäß der das Fahrzeug 8 selbst mit einer Hebeeinrichtung 34 für die Gutablage 10 ausgestattet ist.

Anhand der Fig. 18 und Fig. 19 ist eine Gutübergabe auf Lagerstellen 1 während der Fahrt des Fahrzeuges 8 veranschaulicht, zu welchem Zweck die Lagerstellen 1 mit entgegengesetzt zur Fahrtrichtung des Fahrzeuges 8 gerichteten Gutaufnahmen 35 versehen sind. Ein Gut 2 gelangt hierbei über ein Fahrzeug 8 auf eine Versandrampe 36. Eine ähnliche Einrichtung mit schrägen Versandrampen 36 ist auch in Fig. 20 gezeigt.

Fig. 21 veranschaulicht eine Situation, bei der ein Fahrzeug 8 andere Fahrzeuge 8, die bei einer Lagerstelle 1 in Stellung gebracht sind, überholt. Es handelt sich hierbei um eine Sortieranlage mit Festlegung der Sortierreihenfolgen mit einer Priorisierungsmöglichkeit einzelner Güter 2.

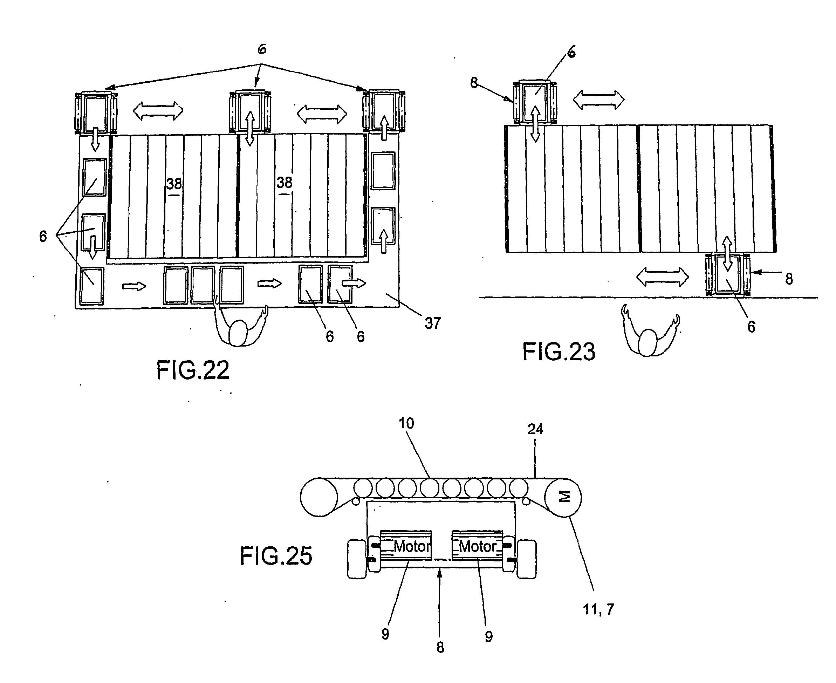

Die Fig. 22 und Fig. 23 veranschaulichen Kommissionierstationen, und zwar gemäß Fig. 22 mit fest installierter Fördertechnik 37 und gemäß Fig. 23 in Kombination mit erfindungsgemäßer Fördertechnik und Einsatz der Fahrzeuge 8, und automatischer Nachfüllung der Regale 3.

Dabei können die Regale 38 auch nur als einfachtiefe Abstellplätze für Behälter 6 ausgebildet sein und die Ware entweder aus den Regalen 38 auf die Wagen 8 oder Behälter 6 oder umgekehrt kommissioniert werden.

Im Zusammenhang mit der gegenständlichen Erfindung ergeben sich auch besonders einfache Kommissionierarbeitsplätze 33, die platzsparend direkt in das Regal 38 integriert werden können (siehe Fig. 27). Zur besseren Erreichbarkeit der Behälter 6 können dazu die Regalreihen im Kommissionierbereich leicht versetzt angeordnet werden. Die Abstellplätze für den Behälter 6 können von den Fahrzeugen 8 trotzdem einfach erreicht werden, weil diese ja frei auch im Regal 38 navigieren können.

Kommissioniert wird entweder von der oberen Ebene 40 in die untere Ebene 41 oder umgekehrt.

Die Kommissionierung kann dabei durch Pick by Light oder Pick by Voice Systeme unterstützt werden. Weiters kann der Arbeitsplatz mit Bildschirmunterstützung oder anderer Bedienerführung ausgestattet sein.

Fig. 24 betrifft eine Füllstation eines automatischen Kommissioniersystems, bei der am Fahrzeug 8 befindliche Behälter 6 mit unterschiedlichen Waren bestückt werden.

## Patentansprüche

1. Verfahren zum Fördern von Gütern (2) mit mindestens einem in einem Lager autonom verfahrbaren Fahrzeug, **gekennzeichnet durch** die Kombination folgender Merkmale:
- ein mit einer Recheneinheit (7) ausgestattetes Fahrzeug (8) erhält, vorzugsweise über Funk, mindestens einen Auftrag, und zwar bezüglich:
a) eines abzuholenden oder abzugebenden Gutes (2), und/oder
b) eines Zielortes z.B. einer Lagerstelle (1) im Lager, und/oder
c) eines zurückzulegenden Weges,
- worauf die Recheneinheit (7) des Fahrzeugs (8)
- für den Auftrag a) den Zielort und den optimalen bzw. angenähert optimalen Fahrweg,
- für den Auftrag b) den optimalen bzw. annähernd optimalen Fahrweg festlegt,
- für die Aufträge a) oder b) oder c) die Bewegungstransaktion startet,
- wobei am Zielort das Fahrzeug (8) von der Recheneinheit (7) aktiviert wird, indem es das Gut (2) selbsttätig übernimmt oder abgibt oder beladen bzw. entladen wird,
- worauf gegebenenfalls bei Vorliegen eines weiteren Auftrages ein weiteres Gut (2) geholt oder das aufgeladene Gut zu einem weiteren in einem Auftrag gemäß a), b) und/oder c) definierten Zielort geführt wird.

2. Verfahren nach Anspruch 1, **dadurch gekennzeichnet, dass** das Be- und/oder Entladen des Fahrzeuges (8) passiv erfolgt, wobei vorzugsweise sich im Lager mindestens ein aktives Beladeelement und/oder Entladeelement befindet und bei Einlangen des Fahrzeuges (8) aktiviert wird, vorzugsweise mittels des Fahrzeuges (8) selbst.

3. Verfahren nach Anspruch 1 oder 2, **dadurch gekennzeichnet, dass** das Be- und/oder Entladen des Fahrzeuges (8) aktiv erfolgt, zu welchem Zweck ein am Fahrzeug (8) angeordnetes antreibbares Be- und Entladeelement (10) aktiviert wird, wie z.B. ein Förderband, eine Förderkette, Förderrollen etc., vorzugsweise durch das Fahrzeug (8) selbst.

4. Verfahren nach einem oder mehreren der Ansprüche 1 bis 3, **dadurch gekennzeichnet, dass** das Be- und/oder Entladen des Fahrzeuges (8) bei Einlangen des Fahrzeuges (8) an der Be- bzw. Entladestelle automatisch, d.h. durch am Fahrzeug vorgesehene Auswurfeinrichtung (28) und/oder durch Schwerkraft erfolgt.

5. Verfahren nach einem oder mehreren der Ansprüche 1 bis 4, **dadurch gekennzeichnet, dass** zwei oder mehrere Fahrzeuge (8) unter Bildung einer Funktionseinheit zumindest einen Teil der Fahrstrecke gemeinsam zurücklegen und gegebenenfalls gemeinsam ein mit seinen Abmessungen die Abmessungen eines einzelnen Fahrzeuges (8) überschreitendes Gut (2) transportieren.

6. Verfahren nach Anspruch 5, **dadurch gekennzeichnet, dass** das Be- und/oder Entladen der Funktionseinheit für die einzelnen Fahrzeuge (8) parallel, d.h. gleichzeitig, durchgeführt wird, oder seriell, d.h. unter Weiterreichung mindestens eines Gutes (2) von Fahrzeug (8) zu Fahrzeug (8).

7. Verfahren nach einem oder mehreren der Ansprüche 1 bis 6, **dadurch gekennzeichnet, dass** mindestens zwei Fahrzeuge (8) zu einer Funktionseinheit zusammengefasst werden und zum Fördern eines Gutes (2) von einem Fahrzeug (8) an einem Ende zu einem Fahrzeug (8) am anderen Ende der Funktionseinheit eingesetzt werden.

8. Verfahren nach einem oder mehreren der Ansprüche 1 bis 7, **dadurch gekennzeichnet, dass** ein Gut (2) mittels eines Fahrzeugs (8) in vertikaler Richtung gefördert wird, und zwar durch Anheben bzw. Senken einer am Fahrzeug (8) vorgesehenen Gutablage (10).

9. Verfahren nach einem oder mehreren der Ansprüche 1 bis 8, **dadurch gekennzeichnet, dass** ein Fahrzeug (8) von einer Ebene (31) in eine vertikal darüber- oder darunterliegende Ebene (31) gehoben und/oder gesenkt wird.

10. Verfahren nach einem oder mehreren der Ansprüche 1 bis 9, **dadurch gekennzeichnet, dass** das Be- und/oder Entladen eines Fahrzeuges (8) oder einer Funktionseinheit nach Anspruch 5 bei in Fahrt befindlichem Fahrzeug (8) bzw. bei in Fahrt befindlicher Funktionseinheit erfolgt.

11. Anlage zur Verwirklichung des Verfahrens nach einem oder mehreren der Ansprüche 1 bis 10, **gekennzeichnet durch** die Kombination folgender Merkmale:
- ein Lager für Güter (2), das eine Mehrzahl von für die Güter (2) bestimmte, Lagerstellen (1) aufweist,
- mindestens einen Fahrweg entlang der und/oder zwischen den Lagerstellen (1),
- mindestens ein mit einer Recheneinheit (7) ausgestattetes, autonom verfahrbares Fahrzeug (8),
- mit einer Gutablage (10) für mindestens ein Gut (2),
- mit einem von der Recheneinheit (7) aktivierbaren Fahrwerk und
- mit einer Datenübertragungseinrichtung (11) zur Übermittlung von an einer Schaltstelle (12) aufgegebenen Daten zur Recheneinheit (7) des Fahrzeuges (8).

12. Anlage nach Anspruch 11, **gekennzeichnet durch** ein Fahrzeug (8) mit einem die Gutablage (1) versorgenden aktiven Be- und/oder Entladeelement (24), aktivierbar von der Recheneinheit (7) und wirkend quer und/oder längs zur Fahrtrichtung des Fahrzeuges (8).

13. Anlage nach Anspruch 11 oder 12, **gekennzeichnet durch** ein Fahrzeug (8), dessen Gutablage (10) selbst als Fördereinrichtung (24) wirkend quer und/oder längs zur Fahrtrichtung des Fahrzeuges (8) ausgebildet ist, welche Gutablage (10) aktivierbar ist von der Recheneinheit (7).

14. Anlage nach einem oder mehreren der Ansprüche 11 bis 13, **dadurch gekennzeichnet, dass** die Gutablage (10) des Fahrzeuges (8) mittels einer Hubeinrichtung (34) heb- und senkbar ist, welche Hubeinrichtung (34) vorzugsweise von der Recheneinheit (7) aktivierbar ist.

15. Anlage nach einem oder mehreren der Ansprüche 11 bis 14, **dadurch gekennzeichnet, dass** das Fahrzeug (8) mit einer Auswurfeinrichtung (26, 28, 29) zum automatischen Be- und/oder Entladen in, bzw. aus Schwerkraftschächten (27) ausgestattet ist, welche Auswurfeinrichtung (28, 29) vorzugsweise mittels der Recheneinheit (7) von einer aktiven Position in eine passive Position und umgekehrt aktivierbar ist.

16. Anlage nach einem oder mehreren der Ansprüche 11 bis 15, **gekennzeichnet durch** zwei oder mehrere Fahrzeuge (8), die mit einer Kupplungseinrichtung (29') ausgestattet sind und die zu einer Funktionseinheit kuppelbar sind, welche Kupplungseinrichtungen (29') vorzugsweise mittels der Recheneinheit (7) aktivierbar sind.

17. Anlage nach einem oder mehreren der Ansprüche 11 bis 16, **gekennzeichnet durch** eine Datenübertragungseinrichtung (11) zur Übermittlung von an der Schaltstelle (12) aufgegebenen Daten zur Recheneinheit (7), die vorzugsweise ausgebildet ist als Funkeinrichtung und/oder Infrarotschnittstelle und/oder als Steckverbindung und/oder verwirklicht ist **durch** Schleifkontakte (13) und/oder als Ultraschalleinrichtung ausgebildet ist.

18. Anlage nach einem oder mehreren der Ansprüche 11 bis 17, **gekennzeichnet durch** mindestens eine Lagerstelle (1) mit einem aktiven Be- und/oder Entladeelement (22), aktivierbar vorzugsweise von der Recheneinheit (7) des Fahrzeuges (8).

19. Anlage nach einem oder mehreren der Ansprüche 11 bis 18, **gekennzeichnet durch** eine Hebe- und Senkeinrichtung (32) neben einer Lagerstelle (1), vorzugsweise aktivierbar von der Recheneinheit (7) des Fahrzeuges (8).

20. Anlage nach einem oder mehreren der Ansprüche 11 bis 19, **gekennzeichnet durch** eine Lagerstelle (1) ausgestattet mit einer schwerkraftbedingten Fördereinrichtung (23, 27), wie einer geneigten Rollenbahn (23), wobei die Lagerstelle (1) an der Fahrbahn mit einer Stopp-Einrichtung (10) für ein Gut (2) versehen ist, die vom Fahrzeug (8) aktivierbar oder deaktivierbar ist, entweder mechanisch **durch** Eintreffen oder Vorbeibewegen des Fahrzeuges (8) an der Lagerstelle (1) oder **durch** die Recheneinheit (7).

## Claims

1. A method for transporting goods (2), comprising at least one vehicle which can be autonomously displaced in a store, **characterized by** the combination of the following features:
- a vehicle (8) provided with a computing unit (7) receives, preferably by radio, at least one instruction relating to:
a) a product (2) to be fetched or delivered, and/or
b) a target location, e.g. a storage area (1) in the store, and/or
c) a path to be covered;
- whereupon the computing unit (7) of the vehicle (8) establishes
- the target location and the optimum or approximately optimum route for instruction a);
- and the optimum or approximately optimum route for the instruction b);
- and starts the displacement transaction for the instructions a) or b) or c);
- with the vehicle (8) being activated by the computing unit (7) at the target location, in such a way as to automatically receive or deliver the product (2) or to load and unload the same;
- whereupon optionally, if another instruction is provided, another product (2) is fetched or the loaded product is guided to another target location defined in an instruction relating to a), b) and/or c).

2. A method according to claim 1, **characterized in that** the loading and/or unloading of the vehicle (8) occurs passively, with at least one active loading and/or unloading element being preferably situated in the store and being activated upon arrival of the vehicle (8), preferably by means of the vehicle (8) itself.

3. A method according to claim 1 or 2, **characterized in that** the loading and/or unloading of the vehicle (8) occurs actively, for which purpose a displaceable loading and unloading element (10) is activated which is arranged on the vehicle (8), e.g. a conveyor belt, a conveyor chain, conveyor rollers, etc, preferably by the vehicle (8) itself.

4. A method according to one or several of the claims 1 to 3, **characterized in that** the loading and unloading of the vehicle (8) occurs automatically upon arrival of the vehicle (8) at the loading or unloading point, i.e. by ejector devices (28) provided on the vehicle and/or by gravity.

5. A method according to one or several of the claims 1 to 4, **characterized in that** two or more vehicles (8) cover at least a part of the route together by forming a functional unit and optionally jointly transport a product (2) which with respect to its dimensions exceeds the dimensions of an individual vehicle (8).

6. A method according to claim 5, **characterized in that** the loading and/or unloading of the functional unit is performed for the individual vehicles (8) in parallel, i.e. simultaneously, or serially, i.e. by forwarding at least one product (2) from vehicle (8) to vehicle (8).

7. A method according to one or several of the claims 1 to 6, **characterized in that** at least two vehicles (8) are combined into a functional unit and are used for conveying a product (2) from one vehicle (8) at one end to a vehicle (8) at the other end of the functional unit.

8. A method according to one or several of the claims 1 to 7, **characterized in that** a product (2) is conveyed by means of a vehicle (8) in the vertical direction, which occurs by lifting or lowering a product rack (10) provided on the vehicle (8).

9. A method according to one or several of the claims 1 to 8, **characterized in that** a vehicle (8) is lifted and/or lowered from a plane (31) to a plane (31) situated vertically above or below the same.

10. A method according to one or several of the claims 1 to 9, **characterized in that** the loading and/or unloading of a vehicle (8) or a functional unit according to claim 5 occurs when the vehicle (8) is traveling or when the functional unit is traveling.

11. An installation for carrying out the method according to one or several of the claims 1 to 10, **characterized by** the combination of the following features:
- a store for products (2), comprising a plurality of storage areas (1) determined for the products (2);
- at least one route along and/or between the storage areas (1);
- at least one autonomously displaceable vehicle (8) equipped with a computing unit (7);
- with a product rack (10) for at least one product (2);
- with a running gear that can be activated by the computing unit (7), and
- with a data transmission device (11) for transmitting data sent at a switch point (12) to the computing unit (7) of the vehicle (8).

12. An installation according to claim 11, **characterized by** a vehicle (8) with an active loading and/or unloading element which supplies the product rack (10) and can be activated by the computing unit (7) and acts transversally to and/or along the traveling direction of the vehicle (8).

13. An installation according to claim 11 or 12, **characterized by** a vehicle (8) whose product rack (10) itself is arranged as a conveying device (24) which acts transversally to and/or along the traveling direction of the vehicle (8), which product rack (10) can be activated by the computing unit (7).

14. An installation according to one or several of the claims 11 to 13, **characterized in that** the product rack (10) of the vehicle (8) can be lifted or lowered by means of a lifting device (34) which can preferably be activated by the computing unit (7).

15. An installation according to one or several of the claims 11 to 14, **characterized in that** the vehicle (8) is provided with an ejector device (26, 28, 29) for the automatic loading and/or unloading in or from gravity chutes (27), which ejector device (28, 29) can be activated preferably by means of the computing unit (7) from an active position to a passive position and vice-versa.

16. An installation according to one or several of the claims 11 to 15, **characterized by** two or more vehicles (8) which are equipped with a coupling device (29') and which can be coupled into a functional unit, which coupling devices (29') can preferably be activated by means of the computing unit (7).

17. An installation according to one or several of the claims 11 to 16, **characterized by** a data transmission device (11) for transmitting data entered at the switch point (12) to the computing unit (7), which data transmission device is preferably arranged as a radio device and/or infrared interface and/or as a plug-in connection and/or is realized by sliding contacts (13) and/or is arranged as an ultrasonic device.

18. An installation according to one or several of the claims 11 to 17, **characterized by** at least one storage area (1) with an active loading and/or unloading element (22) which can preferably be activated by the computing unit (7) of the vehicle (8).

19. An installation according to one or several of the claims 11 to 18, **characterized by** a lifting and lowering device (32) which is adjacent to a storage area (1) and preferably can be activated by the computing unit (7) of the vehicle (8).

20. An installation according to one or several of the claims 11 to 19, **characterized by** a storage area (1) which is equipped with a gravity-induced conveying device (23, 27) such as an inclined gravity roller conveyor (23), with the storage area (1) being provided on the track with a stop device (22) for a product (2) which can be activated or deactivated by the vehicle (8), either mechanically by the arrival at or movement of the vehicle (8) past the storage area (1) or by a computing unit (7).

## Revendications

1. Procédé de transport de marchandises (2) avec au moins un véhicule autonome, se déplaçant dans un entrepôt,
**caractérisé par**
la combinaison des caractéristiques suivantes :
- un véhicule (8) équipé d'une unité de calcul (7) qui reçoit de préférence par radio au moins une mission concernant :
a) une marchandise (2) à chercher ou à livrer et/ou
b) une destination, par exemple un point de magasinage (1) dans l'entrepôt et/ ou
c) un trajet à parcourir,
- puis l'unité de calcul (7) du véhicule :
- pour la mission a) fixe la destination et le trajet optimum ou sensiblement optimum,
- pour la mission b), le trajet optimum ou pratiquement optimum,
- pour les missions a) ou b) ou c), elle lance la transaction de mouvement,
- et à la destination, le véhicule (8) est activé par l'unité de calcul (7) pour réceptionner ou livrer ou charger ou décharger automatiquement la marchandise (2),
- puis le cas échéant en cas d'autres missions, cherche une autre marchandise (2) ou conduit la marchandise chargée vers une autre destination définie dans une mission selon a, b) et/ou c).

2. Procédé selon la revendication 1,
**caractérisé en ce que**
le chargement et/ou le déchargement du véhicule (8) se fait de manière passive et l'entrepôt comporte au moins un élément de chargement et/ou de déchargement actif qui est activé lors de l'arrivée du véhicule (8), de préférence par le véhicule (8) lui-même.

3. Procédé selon la revendication 1 ou 2,
**caractérisé en ce que**
le chargement et/ou 1 déchargement du véhicule (8) se fait de manière active et pour cela un élément de chargement ou de déchargement (10), entraîné, équipant le véhicule (8), sera activé tel que par exemple un convoyeur à bande, un convoyeur à chaîne, un convoyeur à rouleaux, etc..., de préférence par le véhicule (8) lui-même.

4. Procédé selon l'une ou plusieurs des revendications 1 à 3,
**caractérisé en ce que**
le chargement et/ou le déchargement du véhicule (8) se fait automatiquement lorsque le véhicule (8) arrive au point de chargement ou de déchargement, c'est-à-dire par une installation d'éjection (28) équipant le véhicule et/ ou par le poids.

5. Procédé selon l'une ou plusieurs des revendications 1 à 4,
**caractérisé en ce que**
deux ou plusieurs véhicules (8) forment une unité fonctionnelle, parcourent en commun au moins une partie du trajet et le cas échéant transportent en commun une marchandise (2) dépassant les dimensions d'un seul véhicule (8).

6. Procédé selon la revendication 5,
**caractérisé en ce que**
le chargement et/ou le déchargement de l'unité fonctionnelle des différents véhicules (8) est réalisé en parallèle, c'est-à-dire simultanément ou en série, c'est-à-dire en transmettant au moins une marchandise (2) du véhicule (8) vers un autre véhicule (8).

7. Procédé selon l'une ou plusieurs des revendications 1 à 6,
**caractérisé en ce qu'**
au moins deux véhicules (8) sont regroupés en une unité fonctionnelle et sont utilisés pour transporter une marchandise (2) d'un véhicule (8) à une extrémité vers un véhicule (8) à une autre extrémité de l'unité fonctionnelle.

8. Procédé selon l'une ou plusieurs des revendications 1 à 7,
**caractérisé en ce qu'**
on transporte une marchandise (2) dans la direction verticale à l'aide d'un véhicule (8) par soulèvement ou abaissement d'un emplacement de réception de marchandise (10) prévu sur le véhicule (8).

9. Procédé selon l'une ou plusieurs des revendications 1 à 8,
**caractérisé en ce qu'**
on soulève et/ ou on abaisse un véhicule (8) d'un plan (31) dans un plan (31) situé verticalement au-dessus ou en dessous de celui-ci.

10. Procédé selon l'une ou plusieurs des revendications 1 à 9,
**caractérisé en ce que**
le chargement et/ou le déchargement d'un véhicule (8) ou d'une unité fonctionnelle selon la revendication 5 se fait avec un véhicule (8) en déplacement ou une unité fonctionnelle en déplacement.

11. Installation pour la mise en oeuvre du procédé selon l'une ou plusieurs des revendications 1 à 10,
**caractérisée par**
la combinaison des caractéristiques suivantes :
- un entrepôt de marchandises (2) qui comporte plusieurs zones d'entreposage (1) destinées aux marchandises (2),
- au moins un trajet le long des zones d'entreposage (1) et/ou entre celles-ci,
- au moins un véhicule automobile (8) équipé d'une unité de calcul (7),
- un emplacement de réception de marchandises (10) pour au moins une marchandise (2),
- un châssis activé par l'unité de calcul (7) et
- une installation de transmission de données (11) pour transmettre des données fournies par un point de commutation (12) vers l'unité de calcul (7) du véhicule (8).

12. Installation selon la revendication 1,
**caractérisée par**
un véhicule (8) muni d'un élément de chargement et/ou de déchargement (24) alimentant l'entrepôt (1), activé par l'unité de calcul (7) et agissant transversalement et/ou longitudinalement par rapport à la direction de déplacement du véhicule (8).

13. Installation selon la revendication 11 ou 12,
**caractérisée par**
un véhicule (8) dont l'emplacement de réception de marchandises (10) est réalisé lui-même comme installation de convoyage (24) fonctionnant transversalement et/ou longitudinalement à la direction de déplacement du véhicule (8), cet emplacement de réception de marchandises (10) est activée par l'unité de calcul (7).

14. Installation selon l'une ou plusieurs des revendications 11 à 13,
**caractérisée en ce que**
l'emplacement de réception de marchandises (10) du véhicule (8) peut être soulevé ou abaissé par une installation de levage (34) activée de préférence par l'unité de calcul (7).

15. Installation selon l'une ou plusieurs des revendications 11 à 14,
**caractérisée en ce que**
le véhicule (8) est équipé d'une installation d'éjection (26, 28, 29) pour le chargement et/ou le déchargement automatique dans ou à partir de puits à gravité (27), la direction d'éjection (28, 29) étant activée de préférence par l'unité de calcul (7), d'une position active à une position passive et inversement.

16. Installation selon l'une ou plusieurs des revendications 11 à 15,
**caractérisée par**
deux ou plusieurs véhicules (8) équipés d'une installation d'attelage (29') pour être accouplés et former une unité fonctionnelle, les installations d'attelage (29') étant activées de préférence par l'unité de calcul (7).

17. Installation selon l'une ou plusieurs des revendications 11 à 16,
**caractérisée par**
une installation de transmission de données (11) pour transmettre à l'unité de calcul (7) des données fournies par le point de commutation (12), cette unité étant de préférence réalisée comme installation radio et/ou interface infrarouge et/ou comme connexion et/ou réalisée par des contacts glissants (13) et/ou comme installation à ultrasons.

18. Installation selon l'une ou plusieurs des revendications 11 à 17,
**caractérisée par**
au moins une zone d'entrepôt (1) avec un élément de chargement et/ou de déchargement actif (22), activé de préférence par l'unité de calcul (7) du véhicule (8).

19. Installation selon l'une ou plusieurs des revendications 11 à 18,
**caractérisée par**
une installation de soulèvement ou d'abaissement (32) à côté d'une zone d'entrepôt (1), de préférence activée par l'unité de calcul (7) du véhicule (8).

20. Installation selon l'une ou plusieurs des revendications 11 à 19,
**caractérisée par**
une zone d'entrepôt (1) équipée d'une installation de convoyage (23, 27) par le poids telle qu'un chemin à rouleaux (23), incliné, la zone d'entrepôt (1) étant munie, au niveau du trajet, d'une installation d'arrêt (10) pour une marchandise (2), cette installation étant activée ou neutralisée par le véhicule (8) soit mécaniquement par l'arrivée ou le passage du véhicule (8) dans la zone d'entrepôt (1) ou par l'unité de calcul (7).
